# EUROPEAN PATENT APPLICATION

(11) **EP 1 752 907 A1**
(43) Date of publication of application: **14.02.2007**
(21) Application number: 05727341.9
(22) Date of filing: 29.03.2005
(51) Int. Cl.: G06K 1/12, G06F 3/12, B41J 5/30, C09D 11/02

(54) **PRINT INK SYSTEM AND PRINT METHOD USED FOR PRINT "IT" SHOPPING-LINKED PRINTED MATTER AND PRINT "IT" SHOPPING-LINKED PRINTED MATTER**

(30) Priority: 30.03.2004 JP 2004098583
(71) Applicant: DAINICHISEIKA COLOR & CHEMICALS MFG. CO. LTD., Tokyo 103-8383 (JP); Multi-Media Computerized Co., Ltd., 2-10-2, Yayoi, Bunkyo-ko Tokyo 1130032 (JP)
(72) Inventor: KOSHO, Hiroshi, Chuo-ku, Tokyo 1038383 (JP); SANO, Kazuo, Chuo-ku, Tokyo 1038383 (JP); HARADA, Osamu, Chuo-ku, Tokyo 1037383 (JP); EGI, Shinichiro, Chuo-ku, Tokyo 1038383 (JP); MATSUMOTO, Kazuyori, Chuo-ku, Tokyo 1038383 (JP); OSONOI, Satoshi, Chuo-ku, Tokyo 1038383 (JP); NAKAMURA, Michiei, Chuo-ku, Tokyo 1038383 (JP); MIZUNO, Izumi, yoi, Bunkyo-ku, Tokyo 1130032; (JP); ISOZAKI, Susumu;, yoi, Bunkyo-ku, Tokyo 1130032; (JP)
(74) Representative: Hartz, Nikolai
(86) International application number: PCT/JP2005/005884
(87) International publication number: WO 2005/096211

(57) **Abstract**

A printed matter for IT-dependent, printed-matter-linked shopping is useful in a sales method of a merchandise. According to this sales method, a purchaser chooses the merchandise shown in the printed matter, and shoots it by information terminal equipment. A merchandise information image of the thus-shot section is converted into electrical signals, which are then transmitted via a predetermined network to order the merchandise. A reply is sent to the order for the merchandise, so that the order is accepted and the merchandise is delivered. Further, an accounting of a merchandise bill is performed. The printed matter, therefore, allows consumers to readily and very conveniently order merchandises when the consumers want to purchase them. A printing ink system for printing the printed matter is composed, in combination, of (a) a printing ink for printing a visible picture (A) of the merchandise and (b) a printing ink for printing a merchandise information code (B).

## Description

### Technical Field

The present invention relates to a printing ink system and printing method for a printed matter for IT-dependent, printed-matter-linked shopping and also to the printed matter for IT-dependent, printed-matter-linked shopping. More specifically, the present invention is concerned with a printing ink system and printing method for a printed matter for IT-dependent, printed-matter-linked shopping, which is useful in an IT-dependent, printed-matter-linked shopping method that a picture and information code of a merchandise or service (which may hereinafter be collectively called "merchandise") as shown in the printed matter for IT-dependent, printed-matter-linked shopping are shot, the thus-shot image information is converted into electrical signals, the electrical signals are transmitted to order the merchandise as a desired merchandise, the order is accepted, the merchandise is delivered, and an accounting of a merchandise bill can be performed, and also with the printed matter for IT-dependent, printed-matter-linked shopping.

### Background Art

To purchase a merchandise, a consumer usually visits the relevant sales corner, section or room of a retail store such as a store, supermarket, shopping center or department store, chooses the desired merchandise, and pays its price. In addition, so-called catalog shopping is finding increasing utility. According to this catalog shopping, a person who has become desirous to purchase a merchandise after reading a merchandise catalog magazine sent to him or her or after watching a report or introduction of the merchandise as broadcast on television sends an order to its publisher or retailer by mail such as a postcard or a communication means such as telephone or facsimile to purchase the merchandise.

Recently, use of a further method has started to order a merchandise. According to this further method, a consumer who has become desirous to purchase the merchandise after reading a catalog magazine or advertisement newspaper or after watching a report or introduction of the merchandise as broadcast on television inputs the retailer's URL and code of the merchandise by a personal computer to order the merchandise by internet. This method is, however, not usable by everybody. There are, for example, persons of advanced age who are uncomfortable in reading small characters and consumers who are not versed in operating a personal computer. There is, accordingly, an outstanding demand for the development of a purchasing method that also allows such people to readily make an order.

For the assurance of fake prevention or confidentiality maintenance, on the other hand, it has been a conventional practice to print a stealth barcode, which is invisible to the naked eye, on a printed matter such as a catalog, a prepaid card, an ID card or the like with a printing ink composition which contains an infrared emitting phosphor that gives off light in the infrared range, and to read the barcode information by an optical reader (see, for example, Patent Document 1). Patent Document 1: JP-A-07-188599

### Disclosure of the Invention

### Problems to be Resolved by the Invention

The present invention has been completed with the foregoing circumstances in view. The present inventors have proceeded with an investigation in various ways to achieve the above-described object. Described specifically, a merchandise-advertising printed matter was prepared by printing, in combination with pictures of merchandises, merchandise-related information such as QR code in the form of chromatic pictures with a minimized sense of incompatibility, with a fluorescent ink or infrared absorbing ink which is non-chromatic and practically invisible to the naked eye, or in the form of hidden codes, which are located within the areas of the merchandise pictures and are invisible to the naked eye or are hardly recognizable by the naked eye. When the section of desired one of the merchandises is shot by a cellular phone equipped with shooting function and information code compatible function, it was possible to make the contrast of its chromatic image, fluorescent image, infrared absorbing image or hidden code appear such that it was recognizable as an image. As a result, there has been constructed a system that a person who wants to purchase a merchandise makes use of the printed matter to transmit the corresponding "merchandise image" and "merchandise information code" and hence, to make an order for the merchandise, the merchandise is delivered to have the purchase completed as wanted, and then, an accounting of a merchandise bill can be performed. The present inventors found that this merchandise order, purchase and accounting system does not impair the beauty of the merchandise-advertising printed matter and moreover, is convenient even for persons of advanced age and consumers not accustomed to a computer. Based on this finding, the present invention has been completed.
As such an order, purchase and accounting system for merchandises as described above is constructed to link a printed matter of the merchandises with sales action of the merchandises by information processing technology in the present invention, this system is called "IT-dependent, printed-matter-linked shopping".

Specifically, the present invention provides the following embodiments:
1. A printing ink system for printing a printed matter for IT-dependent, printed-matter-linked shopping, said printed matter being useful in a sales method of a merchandise that:
   (1) a purchaser chooses the merchandise as a desired merchandise from merchandise information shown in the printed matter for IT-dependent, printed-matter-linked shopping, and shoots a corresponding section by information terminal equipment (which may hereinafter be called "the image shooting information equipment") provided with a shooting function and transmitting function (step 1),
   (2) a merchandise information image of the thus-shot section is converted into electrical signals, and the electrical signals are transmitted to a retailer via a predetermined communication network to order the thus-shot merchandise (step 2),
   (3) electrical signals of image information, which have been transmitted corresponding to the order for the merchandise in a predetermined format via the communication network, are received, and are then processed such that a reply corresponding to the image information is sent to confirm the order for the merchandise and to accept the order (step 3),
   (4) the merchandise is delivered from the retailer to the ordering person (step 4), and then
   (5) an accounting of a merchandise bill is performed (step 5), wherein the printing ink system comprises a combination of:
      (I) a printing ink (a) for printing a visible picture (A) of the merchandise in the printed matter for IT-dependent, printed-matter-linked shopping (which may hereinafter be called "the merchandise picture printing ink"); and
      (II) a printing ink (b) for printing a merchandise information code (B) which can be converted into electronic information via the image shot by the image shooting information equipment and can be recognized (which may hereinafter be called "the merchandise information code printing ink").

2. A printing ink system as described above under 1, wherein the merchandise information code (B) contains information on at least one of a uniform resource locator (hereinafter called "URL") of the retailer, a title and date of an advertisement, and details and a code number of the merchandise.
3. A printing method of a printed matter for IT-dependent, printed-matter-linked shopping as described above under 1, wherein the merchandise information code is a barcode, two-dimensional code or digital watermark.
4. A printing ink system as described above under 1, wherein:
   the merchandise picture printing ink (a) is a printing ink selected from printing inks comprising 1 to 8 colored inks and special color inks useful in general printing; and
   the merchandise information code printing ink (b) is a printing ink selected from:
      (1) a printing ink (b-1) for printing a visible information code consisting of "0"/"1" digital signals and visible to the naked eye,
      (2) a printing ink (b-2) for printing an invisible information code consisting of "0"/"1" digital signals and invisible to the naked eye, or
      (3) a printing ink (b-3) for printing an information code obtained by dividing the picture of the merchandise into microareas and converting the microareas into "0"/"1" digital signals, said information code being invisible to the naked eye or unrecognizable by the naked eye.

5. A printing ink system as described above under 4, wherein the printing ink (b-1) for printing the information code visible to the naked eye is a printing ink (b-1) of a single color, 2-8 colors or a special color selected from the group consisting of cyan, magenta, yellow, black, orange, green, purple and brown.
6. A printing ink system as described above under 4, wherein the printing ink (b-1) for printing the information code visible to the naked eye comprises a colorant having light fastness of at least Class 5.
7. A printing ink system as described above under 4, wherein the printing ink (b-2) for printing the information code invisible to the naked eye is:
   (1) a printing ink (b-2-1) comprising a fluorescent colorant capable of providing a print, which is practically non-chromatic or light chromatic under visible light and is excited by ultraviolet rays to emit a fluorescent color in a visible light range, or
   (2) a printing ink (b-2-2) comprising a near infrared absorbing colorant capable of providing a print, which is non-chromatic, light chromatic or chromatic under visible light and has an absorption in a near infrared range.

8. A printing ink system as described above under 4, wherein the printing ink (b-3) for printing the information code, which has been obtained by dividing the image of the merchandise and is invisible to the naked eye or unrecognizable by the naked eye, is:
   (1) a printing ink (b-3-1) for imprinting in the merchandise picture a cryptographic system, which divides the merchandise picture into microareas and converts each of the microareas into "0"/"1" digital signals while taking each cell as a single unit, or
   (2) a printing ink (b-3-2) for imprinting in the merchandise picture a cryptographic system, which converts the merchandise picture into digital signals by dividing the merchandise picture into microareas, dividing each of the microareas into two or more cells as a single unit, and arranging a group of "1" signal cells linearly in a group of "0" signal cells to impart regularity to a distribution of "0"/"1" digital signals.

9. A printing method of a printed matter for IT-dependent, printed-matter-linked shopping in an IT-dependent, printed-matter-linked shopping system comprising a sales method of a merchandise that:
   (1) a purchaser shoots by an image shooting information equipment an image section shown in the printed matter for IT-dependent, printed-matter-linked shopping, which has been distributed to the purchaser, and containing a picture (A) of the merchandise as a desired merchandise and a relevant merchandise information code (B) (step 1),
   (2) a merchandise information code image in the thus-shot section is converted into electrical signals, and the electrical signals are transmitted to a retailer via a predetermined communication network to order the thus-shot merchandise (step 2),
   (3) electrical signals of image information, which have been transmitted corresponding to the order for the merchandise in a predetermined format via the communication network, are received, and are then processed such that a reply corresponding to the image information is sent to confirm the order for the merchandise and to accept the order (step 3),
   (4) the merchandise is delivered from the retailer to the purchaser (step 4), and then
   (5) an accounting of a merchandise bill is performed (step 5), wherein:
      the printing method comprises printing both of the merchandise picture (A) and the merchandise information code (B) with the merchandise image printing ink (a) and the merchandise information code printing ink (b), respectively, in the same merchandise section on a sheet of paper.

10. A printing method as described above under 9,
   wherein as the merchandise information code, a barcode is printed with bar width dimensions of at least 0.20 mm, or a two-dimensional code is printed with cell sizes of at least 0.25 mm.
11. A printed matter for IT-dependent, printed-matter-linked shopping in an IT-dependent, printed-matter-linked shopping system comprising a sales method of a merchandise that:
   (1) a purchaser shoots by an image shooting information equipment an image section shown in the printed matter for IT-dependent, printed-matter-linked shopping, which has been distributed to the purchaser, and containing a picture (A) of the merchandise as a desired merchandise and a relevant merchandise information code (B) (step 1),
   (2) a merchandise information code image in the thus-shot section is converted into electrical signals, and the electrical signals are transmitted to a retailer via a predetermined communication network to order the thus-shot merchandise (step 2),
   (3) electrical signals of image information, which have been transmitted corresponding to the order for the merchandise in a predetermined format via the communication network, are received, and are then processed such that a reply corresponding to the image information is sent to confirm the order for the merchandise and to accept the order (step 3),
   (4) the merchandise is delivered from the retailer to the purchaser (step 4), and then
   (5) an accounting of a merchandise bill is performed (step 5), wherein:
      the printed matter for IT-dependent, printed-matter-linked shopping is a printed matter with both of the merchandise picture (A) and the merchandise information code (B) printed with the merchandise image printing ink (a) and the merchandise information code printing ink (b), respectively, in the same merchandise section on a sheet of paper.
12. A printed matter as described above under 11, wherein the printed matter for IT-dependent, printed-matter-linked shopping is an advertisement printed matter for the sales of merchandises selected from the group consisting of foldouts, merchandise advertisement booklets, merchandise catalogs, merchandise advertisement magazines, and inserted advertisement pages in newspapers or magazines.
13. A printed matter as described above under 11, wherein merchandises to be advertised are tangible or intangible, valuable properties for sale, rent or lease, which are selected from the group consisting of everyday life items, office items, information-related items, specialty items, performance/transport-related merchandises, eating/travel/sightseeing-related merchandises, and real estate properties.

### Advantageous Effects of the Invention

According to the present invention as described above, the printed matter of IT-dependent, printed-matter-linked shopping has been prepared by printing the pictures of merchandises and also printing, in the same areas of the pictures of merchandises, merchandise information codes such as merchandise codes in the form of chromatic pictures with a minimized sense of incompatibility, with an ink which is practically invisible to the naked eye, or in the form of intra-picture hidden codes which are invisible to the naked eye or are hardly recognizable by the naked eye. Accordingly, (1) the beauty of the merchandise-advertising printed matter is not impaired, and (2) in the case of an invisible ink or watermarking ink, merchandises can be printed by fully using the space on paper. (3) When consumers wish to purchase merchandises, diverse consumers, for example, even persons of advanced age who are not comfortable in reading small characters or consumers who are not versed in the operation of a computer can transmit the accompanied image information to order the merchandises only by an operation of shooting the printed pictures of the desired merchandises with information terminal equipment having shooting function and transmitting function such as camera-equipped cellular phones. The present invention, therefore, gives a great convenience to consumers.

### Best Modes for Carrying out the Invention

The present invention will next be described in further detail based on certain preferred embodiments.
A description will be made about the printing ink system, which is useful in the present invention and comprises the combination of (a) the printing ink for printing the printed picture (A) of the merchandise and (b) the printing ink for forming the merchandise information code (B).
The merchandise picture (A) can be formed in a single color, a combination of multiple colors, a standard color of 4 primary colors to 8 colors, or a designated color called a special color of a specified color hue selected from the group consisting of cyan, magenta, yellow, black, orange, green, purple, brown and the like. The printing ink (a) can, therefore, be a printing ink of a color tone including the above-described single color, combination of multiple colors, standard color of 4 primary colors to 8 colors, or designated color.

A description will be made about the merchandise information code (B), which is printed in combination with the above-described merchandise picture (A) in the printed matter of the present invention for IT-dependent, printed-matter-linked shopping, can be converted into electronic information via the image shot by the image shooting information equipment, and can be recognized. As the merchandise information code (B) indicates the merchandise information code of the merchandise picture (A) in the printed matter for IT-dependent, printed-matter-linked shopping, it is necessary that as a location of printing, the merchandise information code (B) be printed within the same merchandise section on the paper sheet of merchandise pictures.
The merchandise information code (B) is information for specifying a merchandise for its order, and is required to include matters required in the business transaction of the merchandise. Illustrative are necessary items such as the URL of the retailer, the title and date of the advertisement, the details of the merchandise, and the code number of the merchandise. As the merchandise information code including these necessary matters, a conventionally-known information code consisting of "0"/"1" digital signals is used. Examples of such an information code include conventionally-known, various barcodes, two-dimensional codes, and digital watermarks. Examples of the two-dimensional codes include "QR CODE" and "MICRO QR CODE" (Denso Wave Incorporated), "PDF417" (Symbol Technologies, Inc.), "DATA MATRIX" (CI Matrix), and "MAXI CODE" (United Parcel Service of America, Inc.).

A description will be made about the merchandise information code printing ink (b).
(1) The merchandise information code (B) can be one formed of a visible information code, which is visible to the naked eye and consists of "0"/"1" digital signals. As this information code is visible to the naked eye and hence, is readily recognizable, and is a chromatic information code, it does not give the purchaser of the merchandise any substantial sense of incompatibility with the picture of the merchandise. The printing ink (b-1) for printing this information code is a printing ink of a single color, a combination of multiple colors, a standard color of 4 primary colors to 8 colors, or a designated color selected from the group consisting of cyan, magenta, yellow, black, orange, green, purple and brown.
   Even when a display rack is left for a relatively long time in a sales corner, section or room, where the display rack is exposed sunlight or lighting, or outdoors, the merchandise information code is required to be surely readable by image shooting information equipment such as a QR code compatible cellular phone. As a colorant for use in the ink, it is therefore desired to use a colorant having good light fastness of Class 5 or higher in the 8-stage ranking system.
   The above-described printing ink may be provided as an ink different from the printing ink (a) for merchandise pictures. It is, however, desired in many instances to make a machine or press plate with the merchandise pictures and the corresponding merchandise information codes carried in combination thereon and to print them at the same time by using the printing ink (b-1).

As chromatic, black and white pigments for use in the printing inks of individual color hues, conventionally-known organic pigments and inorganic pigments can be used. Illustrative are organic pigments such as azo pigments, e.g., soluble azo pigments, insoluble azo pigments and high molecular azo pigments, phthalocyanine pigments, anthraquinone pigments, perinone pigments, perylene pigments, indigo/thioindigo pigments, dioxazine pigments, quinacridone pigments, isoindolinone pigments, isoindoline pigments, quinophthalone pigments, diketopyrrolopyrrole pigments, and metal complex pigments; and inorganic pigments such as carbon black pigment, iron oxide pigments, iron hydroxide pigments, titanium oxide pigments, and complex oxide pigments.

Specific examples of organic pigments having light fastness of Class 5 or higher as described above include as blue pigments, C.I. Pigment Blue 15, 15:2, 15:3, 15:4, 16, 60 and so on; as red, scarlet or bordeaux pigments, C.I. Pigment Red 3, 5, 7, 8, 9, 10, 12, 48, 57, 58, 83, 88, 112, 122, 146, 147, 149, 170, 175, 178, 179, 184, 185, 187, 188, 190, 202, 208, 209, 210, 224 and so on; as yellow pigments, C.I. Pigment Yellow 1, 3, 13, 14, 16, 17, 55, 73, 74, 81, 83, 93, 94, 95, 97, 106, 109, 110, 113, 138, 139, 154, 166, 180 and so on; as orange pigments, C.I. Pigment Orange 5, 34, 36, 38, 43 and so on; as green pigments, C.I. Pigment Green 7, 8, 36 and so on; as reddish purple, purple or bordeaux pigments, C.I. Pigment Violet 19, 23, 32 and so on; as brown pigments, C.I. Pigment Brown 1 and so on; and as black pigments, C.I. Pigment Black 7 and so on.

(2) A description will be made about the printing ink (b-2) for printing an invisible information code, which is invisible to the naked eye and consists of "0"/"1" digital signals.
It is to be noted that this invisible information may also be expressed as "latent image information" in view of the properties of the non-chromatic colorant used in the ink which is invisible to the naked eye.
The followings can be mentioned:
(I) a printing ink (b-2-1) comprising a fluorescent colorant capable of providing a print of latent image, which is non-chromatic or light chromatic under visible light and is excited by ultraviolet rays to emit a fluorescent color in the visible light range, and
(II) a printing ink (b-2-2) comprising a near infrared absorbing colorant capable of providing a print of latent image, which is non-chromatic, light chromatic or chromatic under visible light and has an absorption in the near infrared range.

To protect the beauty of a printed matter from an impairment by a latent image, it is also desired to use such an optical function colorant that the printed matter is practically non-chromatic or very light chromatic when viewed under visible light and gives no sense of incompatibility to consumers.
As a latent image printing ink system for use in the printing of the printed matter of the present invention for IT-dependent, printed-matter-linked shopping, the following combinations of printing inks can be used, for example.

1) Printing ink system making use of the possession and non-possession of ultraviolet fluorescence emitting property
This printing ink system is composed in combination of printing inks capable of providing a printed matter that a printed picture of each merchandise does not emit any color under ultraviolet rays while its associated latent image is excited under ultraviolet rays to produce an emission in the visible light range. Illustrative is a combination of (a) a printing ink containing a chromatic or black pigment not excited substantially under ultraviolet rays and adapted to form a printed picture (A) of each merchandise and (b-2-1) a merchandise information code printing ink containing a fluorescent colorant, which is excited under ultraviolet rays of from 300 to 380 nm to produce an emission in a visible light range of from 400 to 700 nm, and adapted to form its associated latent image (B-2-1).

2) Printing ink system making use of reflecting property and absorbing property in an infrared range
This printing system is composed in combination of printing inks capable of providing a printed matter that a printed picture of each merchandise has a reflection in a near infrared range while its associated latent image has an absorption in a near infrared range. Illustrative is a combination of (a-2) a merchandise picture printing ink having a reflection in a near infrared range of approximately from 700 to 1, 500 nm and adapted to form a printed picture (A) of each merchandise and (b-2-2) a merchandise information code printing ink having an absorption in the same near infrared range and adapted to form its associated latent image (B-2-2). Employed in the merchandise information code printing ink (b-2-2) is such a colorant that the latent image has an absorption in the near infrared range.

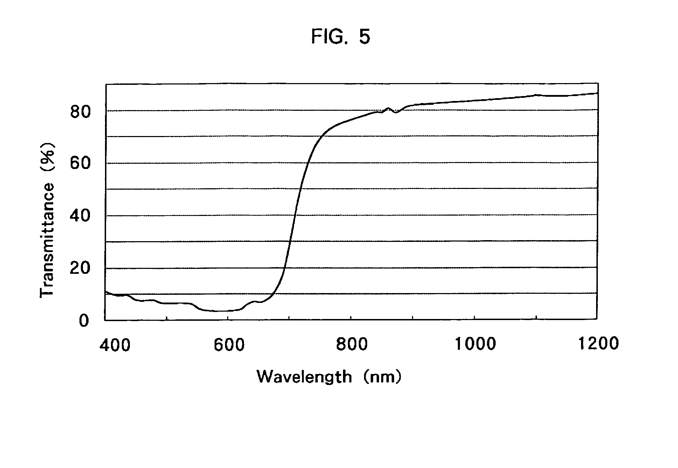

When information terminal equipment equipped with shooting function and transmitting function, such as a cellar phone equipped with an information code compatible camera, is used, the irradiation of ultraviolet rays or infrared rays is needed as an additional function or accessory, or a visible-light-eliminating filter may be used. As an example of a preferred filter, a transmission curve in the visible and infrared ranges is shown in FIG. 5. As such a transmission curve depends on the wavelength sensitivity of a charge coupled device (CCD) used in a camera as an accessory to terminal equipment such as a cellular phone, it is necessary to adjust the function of a filter and the wavelength sensitivity, both of which are included in the camera, in accordance with wavelengths to be used.

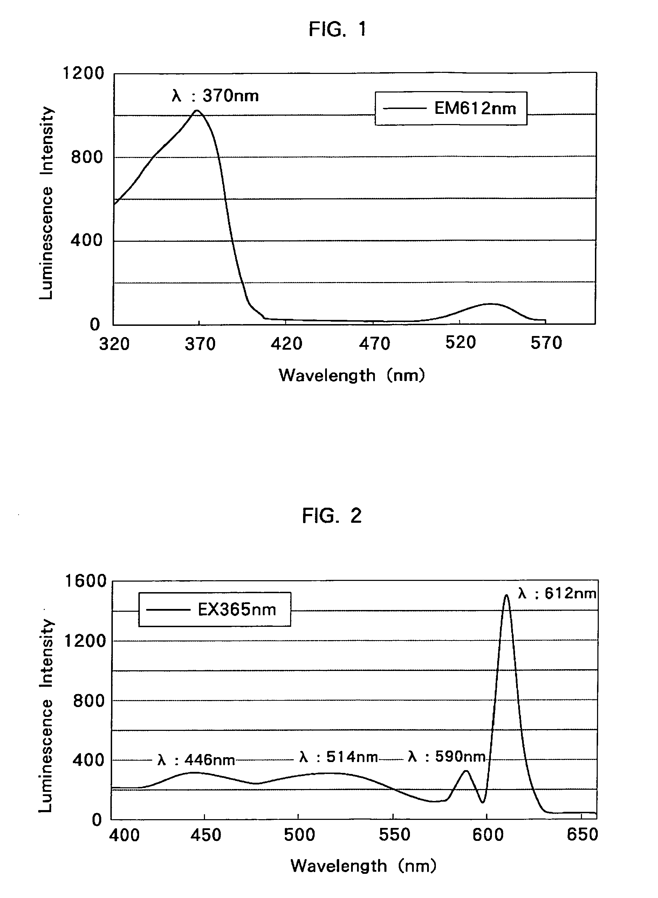

Usable examples of the colorant, which is used in the merchandise information code printing ink (b-2-1) in the system 1), is excited under ultraviolet rays of from 300 to 400 nm and produces an emission in the visible light range, include conventionally-known, organic or inorganic, substantially non-chromatic or light chromatic colorants. Illustrative fluorescence-emitting organic colorants include organic europium complexes, which are non-chromatic under visible light but, when excited, emit red fluorescence. As illustrated in FIG. 1 and FIG. 2, one example of these colorants is non-chromatic under visible light, but as an excitation wavelength, has a maximum excitation wavelength at 370 nm and, when exited under light of 365 nm, emits a red color at a maximum emission wavelength of 612 nm. Like this colorant, a colorant which is excitable under ultraviolet rays of relative long wavelength to produce an emission in a visible light range is desired. As a fluorescence-emitting non-chromatic colorant, on the other hand, a colorant which is non-chromatic and produces green fluorescence by excitation is used.

In the case of the system 2), the merchandise picture printing ink (a), which has a reflection in the near infrared range of approximately from 700 to 1,500 nm and is adapted to form the printed picture (A) of the merchandise, and the merchandise information code printing ink (b-2-2), which has an absorption in the same near infrared range and is adapted to form the associated latent image (B-2-2), are used in combination. As the colorant having an absorption in the near infrared range of approximately from 700 to 1, 500 nm, a conventionally-known infrared absorbing colorant, for example, a phthalocyanine infrared absorbing colorant, cyanine infrared absorbing colorant, or the like can be mentioned. Phthalocyanine infrared absorbing colorants include colorants having maximum absorptions at 713 nm, 788 nm, 830 nm, 933 nm and 1,005 nm, respectively, and cyanine infrared absorbing colorants include colorants having maximum absorptions at 783 nm, 822 nm, 897 nm and 1, 007 nm, respectively.

(3) Digital watermarking system capable of printing digital signals which are invisible to the naked eye or are unrecognizable by the naked eye.
A printing system which uses this digital watermarking ink (b-3) is a cryptographic system that the wide area of a printed picture (A) of each merchandise is divided into microareas and each microarea is converted as a single section into a "0"/"1" digital signal with a watermarking ink. Depending on the form of digital signals and the kind of a printing ink to be used, cryptographic systems can be classified into different types.

(1) Depending on the kind of watermarking ink, the cryptographic systems can be classified into the following types: 1) upon forming a print which is unrecognizable by the naked eye, a chromatic ink (b-1) which does not stain the printed picture (A) of each merchandise is used as a watermarking ink; and 2) upon forming a print which is invisible to the naked eye, the above-described printing ink (b-2-1) with the fluorescent colorant contained therein or the above-described printing ink (b-2-2) with the near infrared absorbing colorant contained therein is used as a watermarking ink (b-3).
(2) Depending on the form of digital signals, the cryptographic systems can be classified into the following types: 1) cryptographic systems that the picture of each merchandise is divided into microareas and the microareas are each converted into "0"/"1" digital signals by taking each cell as a single unit; and 2) cryptographic systems that the picture of each merchandise is divided into microareas, the microareas are each divided further by taking two or more cells as a single unit, and groups of "1" signals are linearly arranged in groups of "0" signals to impart regularity to the distribution of digital signals.

As a printing method for forming the merchandise picture (A) and merchandise information code (B) in the printed matter of the present invention for IT-dependent, printed-matter-linked shopping, a conventionally-known printing method can be used. Illustrative are lithography, intaglio printing, letterpress printing, flexography, stencil printing, inkjet printing, electrophotographic printing, electrostatic printing, and heat transfer printing.
As a printing machine or press, any one of conventionally-known various printing machines or presses for the above-described printing methods can be used. Illustrative are web offset printing presses, sheet-fed offset printing presses, letterpress printing presses, central impression, stack or in-line flexographic presses, screen printing machines, gravure presses, laser printers, inkjet printers, and heat transfer printers.
In addition to a printing method making use of the same printing machine or press, the printing can also be conducted by a printing method that uses different printing machines or presses. For example, it may be preferred to print the "merchandise picture" (A) by lithography, intaglio printing, letterpress printing, flexography or the like and to print the merchandise information code (B) by stencil printing, inkjet printing, electrophotographic printing, electrostatic printing, heat transfer printing or the like.

As a binder resin component, solvent, water-based medium, printing ink additives and the like for use in the preparation of a printing ink for any one of the above-described various printing machines or presses, conventionally-known materials can be used. As a pigment disperser, kneader, mixer and the like for the preparation of such an ink, conventionally-known production machines can be used likewise.

Concerning the printing of the merchandise information code (B-2) as the latent image, especially the effective location and form of its printing, the printing can be conducted in various ways as will be described below.
(1) Using the merchandise information code printing ink (b), the latent image is printed at a blank area or a character area or both of the areas. Including the cases that use the character area, the latent image is not affected by the color hue or color density of the visible picture so that the recognition of the latent image is easiest.
(2) Using the merchandise information code printing ink (b), the latent image is printed over the area of the merchandise picture. In this method, the latent image tends to be affected by the color hue and color density of the visible picture over which the latent image is printed. It is, therefore, necessary to strengthen the contrast by graphic data processing, electronic processing, image processing or the like.

(3) The bars in a barcode are printed with their width dimensions set as large and thick as possible, or a two-dimensional code is printed with its cell size set as large as possible.
(4) By making a machine or press plate such that in the area of the visible picture, (a) very small non-printed areas are formed, (b) the screen ruling is decreased or (c) the dot percent is reduced to such extent as giving no sense of incompatibility to the naked eye, the print is rendered coarse so that very small brighter areas of low dot percent are formed.
(5) As an effective method for making a color inconspicuous when the area of the latent image (B) is slightly colored, the print of the latent image can be rendered coarse (a) by removing small areas in a mosaic or partial mosaic pattern at the location of the printing of the information code, (b) by decreasing the ruling of the information code on the machine or press plate, or (c) by reducing the dot percent of the information code on the machine or press plate.

The method (3) will be described further. In the case of a two-dimensional code or the like as an information code, there is a tendency that its cells become smaller in size and complex to make the size of the code as small as possible and to increase the information content of the code. When shot by a cellular phone equipped with information code reading function or by like equipment, the resolution performance may be reduced due to the resolution capacity of the shooting equipment, which is determined by the pixel number, focal point and the like of the CCD in the camera, or shooting conditions, resulting in a potential problem that the bar picture or cell picture of the information code may not be clearly recognized as image information. Upon printing bars or cells with the merchandise information code printing ink, the greater the size of the bars or cells, the fewer the mistake such as false recognition or recognition disability, the easier the focusing upon shooting, and the more convenient in use. By changing the cell size of a QR code and the width dimensions of bars and margins in a barcode, especially the thickness of finest lines as a standard, recognizability was investigated by a cellular phone equipped with information code reading function.

**Table 1 Line Thickness of Barcode and Reading by Cellular Phone**

| No. | Thickness of finest lines among bars and margins (mm) | Recognition by cellular phone |
|---|---|---|
| 1 | 0.18 | Unrecognizable |
| 2 | 0.20 | Recognizable |
| 3 | 0.23 | Recognizable |
| 4 | 0.25 | Recognizable |

**Table 2 Cell Size of QR code and Reading by Cellular Phone**

| No. | Cell size (mm) | Recognition by cellular phone |
|---|---|---|
| 1 | 0.19 | Unrecognizable |
| 2 | 0.25 | Recognizable |
| 3 | 0.33 | Recognizable |
| 4 | 0.42 | Recognizable |
| 5 | 0.50 | Recognizable |

As the width dimensions of chromatic, black or white bars in a barcode that permit the accurate recognition of the information code even when shot by such information terminal equipment provided with information code reading function, at least 0.20 mm or greater is desired. As the cell size of a two-dimensional code, on the other hand, 0.25 mm or greater is desired.

No particular limitation is imposed on the base material for use in the above-described printed matter for IT-dependent, printed-matter-linked shopping. Usable examples include conventionally-known printable base materials such as paper, chemical fiber mixed paper, synthetic paper, and plastic films.

The printed matter for IT-dependent, printed-matter-linked shopping can generally be a printed matter used as an advertisement for the sales of merchandises. Examples include, but are not limited to, foldouts, merchandise advertisement booklets, merchandise catalogs, merchandise advertisement magazines, and inserted advertisement pages in newspapers or magazines.
Further, merchandises to be advertised can be conventionally-known, tangible or intangible, valuable properties for sale, rent or lease. Illustrative area:
1) Everyday life items
   (a) Household items such as foods and kitchen utensils,
   (b) furniture, home electric and electronic appliances, interior goods, exterior goods, gardening goods and the like, (c) everyday life goods such as clothing, footwear, cosmetics, books and stationery, (d) toys, games, amusement items, sports goods and the like, and (e) vehicles such as automobiles, motorcycles and bicycles;
2) Office items such as office goods, office equipment, and office fixtures;
3) Information-related items such as information equipment and information terminal equipment;
4) Specialty items such as medical goods, care and welfare goods, reagents and testing goods, testing equipment, therapeutic drugs, and teaching aids;
5) Performance/transport-related merchandises, for example, admission tickets for performances such as theatergoing, entertainment, concert, amusement ground, zoos and botanical gardens, toll tickets for highways, bus, railroad and train tickets, airline boarding tickets, and ship, ferry and cruise tickets;
6) Dining/travel/sightseeing-related merchandises such as dinner reservation services, hotel reservation services, sightseeing bus tickets, personal travel tickets, group travel tickets, and package tour tickets; and
7) Real estate properties for sale, rent or lease, such as rooms, houses, buildings, lands, and parking lots.

Upon shooting, it is preferred to provide and use a shielded, stationary, photographing stand so that shooting can be performed by mounting information terminal equipment, which is provided with shooting function, information code compatible function and transmitting function, on the stand. Depending on the combination of printing inks to be used, a shielded, stationary, photographing stand equipped with an ultraviolet radiation lamp or a shielded, stationary, photographing stand equipped with an infrared radiation lamp, a infrared laser source and, if necessary, a visible-light-shielding filter can be provided and used.

### Examples

The present invention will next be described more specifically based on Examples and Comparative Examples. It is to be noted that the designations of "part", "parts" and "%" are on a weight basis unless otherwise specifically indicated. As the printed matter for IT-dependent, printed-matter-linked shopping, the advertisement booklets printed in the below-described Examples are its examples, and the printed matter for IT-dependent, printed-matter-linked shopping is not limited to them. Usable are conventionally-known advertisement printed matters for the sales of merchandises, such as the above-described foldouts, merchandise advertisement booklets, merchandise catalogs, merchandise advertisement magazines, and inserted advertisement pages in newspapers or magazines. As merchandises to be advertised, conventionally-known, tangible or intangible, valuable properties for sale, rent or lease, such as everyday life items, office items, specialty items, performance/transport-related merchandises, eating/travel/sightseeing-related merchandises and real estate properties described above in detail, can be all advertised.

### <Example 1>

### (1) Preparation of an offset printing ink for fluorescence-emitting latent images

A merchandise information code printing ink (b-2-1) for printing a fluorescence-emitting latent image (B-2-1) as a merchandise information code was prepared. As a fluorescent colorant which is non-chromatic to the naked eye and can be excited under ultraviolet rays to produce an emission in a red color, a red-fluorescence-emitting colorant-1 (an organic europium complex colorant) was provided. An oil varnish for offset inks (78.0 parts), a polyethylene-based wax (5.0 parts) and an ink solvent (7 parts) were thoroughly kneaded, followed by the further kneading with the above-described red-fluorescence-emitting colorant-1 (10 parts) to prepare a red-fluorescence-emitting offset ink-1. In the above description, the oil varnish for offset inks contains, as main components, a rosin-modified phenol resin, a vegetable-oil-modified isophthalic alkyd resin and soybean oil, and as additives, the ink solvent and an aluminum chelate. To observe optical properties of the red-fluorescence-emitting colorant-1, printing paper was printed with the red-fluorescence-emitting offset ink b-2-1, and an excitation spectrum and fluorescence spectrum were measured by a fluorospectrophotometer. The excitation spectrum was measured with the emitted fluorescence set at 612 nm. A broad excitation spectrum having a maximum excitation at a wavelength of 370 nm was observed. The excitation spectrum is shown in FIG. 1. Further, a fluorescence spectrum was also measured with an excitation wavelength at 365 nm. A relatively sharp fluorescence spectrum having a maximum emission at a wavelength of 612 nm was observed. From the fluorescence spectrum, the emission was also indicated to be red. The fluorescence spectrum is shown in FIG. 2.

### (2) Preparation of merchandise picture printing inks

Merchandise picture printing inks (a-1) for printing a merchandise picture (A) was prepared. Using, as colorants, PY12 (insoluble azo yellow colorant, light fastness: Class 3 to 4), PR57:1 (soluble azo red colorant, light fastness: Class 4), PB15 : 3 (copper phthalocyanine blue colorant, light fastness: Class 8) and PBK7 (carbon-black black colorant, light fastness: Class 8) all of which are conventional ink colorants employed in the offset printing of merchandise advertisements or the like, offset printing inks were prepared in accordance with the below-described formulation in a similar manner as the preparation of the fluorescence-emitting latent image printing ink described above under (1).

**Table 3**

| Used material | Yellow ink a-1 | Magenta ink a-1 | Cyan ink a-1 | Black ink a-1 |
|---|---|---|---|---|
| PY12 | 6 | | | |
| PR57:1 | | 15 | | |
| PB15:3 | | | 15 | |
| PBK7 | | | | 18 |
| Oil varnish | 86 | 78 | 78 | 75 |
| Wax | 5 | 5 | 5 | 5 |
| Solvent | 2 | 2 | 2 | 2 |
| Total | 100 | 100 | 100 | 100 |

The oil varnish in Table 3 was the same as the oil varnish for offset inks, which was used above in (1).

### (3) Printing of a printed matter for IT-dependent, printed-matter-linked shopping, and ordering

To print an advertisement booklet for IT-dependent, printed-matter-linked shopping by using the red-fluorescence-emitting offset ink b-2-1 obtained above in (1) and the offset printing inks a-1 prepared above in (2), a press plate for offset printing was provided. Merchandise pictures (A) such as photographic pictures of merchandises were printed in four colors, and prints of characters such as the descriptions about the details of the merchandises and the brands and prices of the merchandises were added by black-color printing. At the character-printed area and a blank area of each merchandise, a barcode for specifying the merchandise to be ordered, such as the code number of its manufacturer or retailer and the code number and price of the merchandise, is printed with a red-fluorescence-emitting, merchandise information code printing ink. As a press plate for the merchandise information codes, a press plate was made with the barcodes formed at a finest line width of 0.25 mm, a line length of 2.5 cm and a dot percent of 100%. Concerning the advertisement areas of the merchandises, press plates were made at a screen ruling of 175 lines per inch.
The advertisement booklet for IT-dependent, printed-matter-linkedshopping was obtained by printing the advertisements of the merchandises, such as photographs of the merchandises, with the offset printing inks of the four colors obtained above in (2), i.e., the black ink a-1, cyan ink a-1, magenta ink a-1 and yellow ink a-1 on coated paper by a four-color offset printing press and further printing non-chromatic barcodes as merchandise information codes with the red-fluorescence-emitting offset ink b-2-1, which had been obtained above in (1), at the character and blank areas beside the pictures of the merchandises by a single-color offset printing press.

### (4) Ordering for, receipt of and payment for a merchandise based on the printed matter for IT-dependent, printed-matter-linked shopping

A person who wanted to make a purchase provided a shielded, stationary, photographing stand, which was internally equipped with an approximately 370 nm ultraviolet radiation lamp and permitted the mounting of a cellular phone equipped with an information code compatible camera to perform shooting. The photographing stand equipped with the ultraviolet lamp was placed over the advertisement of a desired merchandise shown in the advertisement booklet for IT-dependent, printed-matter-linked shopping obtained above in (3). The camera of the cellular phone was directed toward the section of the picture and description of the merchandise, and then, the ultraviolet lamp was turned on. After confirming that a red fluorescent image of the merchandise information of the desired merchandise was clearly and accurately displayed on a liquid crystal display of the cellular phone, shooting was performed, the image of the merchandise was converted into electrical signals, and then, the electrical signals were transmitted to make an order. The merchandise was delivered from the retailer to the ordering person, and further, an accounting of a merchandise bill was performed.

### Example 2

### (1) Preparation of a fluorescence-emitting inkjet printing ink, and printing

Prepared was a red-fluorescence-emitting inkjet ink b-2-1, which contained the red-fluorescence-emitting colorant-1 (6 parts) used in Example 1(1) and an acrylic resin (methyl methacrylate-butyl acrylate-hydroxyethyl methacrylate, 60 : 30 : 10) (10 parts) and employed as a solvent a 1:1 mixed solvent of methyl ethyl ketone (hereinafter abbreviated as "MEK") and propylene glycol monomethyl ether acetate (hereinafter abbreviated as "PGMA").
In a similar manner as in Example 1 (3), 4-color offset printing was performed with the merchandise picture printing inks (a-1) of Example 1 (2). A piezoelectric inkjet printer connected to a personal computer was provided. In accordance with images of merchandise information codes provided on the personal computer, non-chromatic barcodes were printed as merchandise information codes with the above-described red-fluorescence-emitting inkjet ink b-2-1 at character and blank areas beside the pictures of the respective merchandises to obtain an advertisement booklet for IT-dependent, printed-matter-linked shopping.

### (2) Ordering for, receipt of and payment for a merchandise based on the printed matter for IT-dependent, printed-matter-linked shopping

Ordering for, receipt of and payment for a merchandise by a person, who wished to purchase the merchandise, on the basis of the above-described advertisement booklet for IT-dependent printed-matter-linked shopping were successfully performed in a similar manner as in Example 1(3).

### Example 3

### (1) Printing of a printed matter for IT-dependent printed-matter-linked shopping

A press plate was provided to perform the offset printing of a printed matter for IT-dependent printed-matter-linked shopping. Concerning QR codes indicating merchandise information codes, a press plate for the merchandise information codes was made by setting each code image area at 20.5 mm per side and the cell size at 0.50 mm because the section of each merchandise was about 5 cm long at each side. As press plates for photographic pictures of the merchandises, three press plates of cyan, magenta and yellow were also made at a screen ruling of 175 lines per inch. Those press plates were made such that, at printing areas which would overlap with emitting parts in the cells of the QR codes, very small parts not to be printed were distributed to permit reproduction of the QR codes by image processing although the QR codes were not conspicuous to the naked eye. The above-described cyan, magenta and yellow press plates and two-dimensional code press plate were set on a four-color offset printing press. Merchandise advertisements were printed with the offset printing inks of three colors obtained in Example 1(2), i.e., the cyan ink a-1, magenta ink a-1 and yellow ink a-1 on coated printing paper, and as the fourth color, the QR codes were printed as merchandise information codes with the red-fluorescence-emitting offset ink b-2-1 obtained in Example 1(1) to obtain an advertisement booklet for IT-dependent, printed-matter-linked shopping.

### (2) Ordering for, receipt of and payment for a merchandise based on the printed matter for IT-dependent, printed-matter-linked shopping

In a similar manner as the method of the order made in Example 1(4), a person who wanted to make a purchase placed a photographing stand, which was equipped with an ultraviolet lamp, over the picture of a merchandise in the advertisement booklet for IT-dependent, printed-matter-linked shopping, and mounted a camera of a cellar phone toward the picture of the merchandise. The ultraviolet lamp was turned on, and the camera was set. After confirming that a red fluorescent image of the merchandise information of the merchandise was clearly and accurately displayed on a liquid crystal display of the cellular phone, shooting was performed, the image of the merchandise was converted into electrical signals, and then, the electrical signals were transmitted to make an order. The merchandise was delivered from the retailer to the ordering person, and further, an accounting of a merchandise bill was performed.

### Example 4

### (1) Printing with a fluorescence-emitting inkjet printing ink

In a similar manner as in Example 3(2), four-color offset printing was performed with the merchandise picture printing inks (a-1) of Example 1(2). A piezoelectric inkjet printer connected to a personal computer was provided. In accordance with images of merchandise information codes provided on the personal computer, non-chromatic barcodes were printed as merchandise information codes with the red-fluorescence-emitting inkjet ink b-2-1 of Example 2 (1) at character and blank areas beside the pictures of the respective merchandises to obtain an advertisement booklet for IT-dependent, printed-matter-linked shopping.

### (2) Ordering for, receipt of and payment for a merchandise based on the printed matter for IT-dependent, printed-matter-linked shopping

Ordering for, receipt of and payment for a merchandise by a person, who wished to purchase the merchandise, on the basis of the above-described advertisement booklet for IT-dependent printed-matter-linked shopping were successfully performed in a similar manner as in Example 3 (2).

### Example 5

### (1) Preparation of a near-infrared-absorbing, latent-image-printing ink

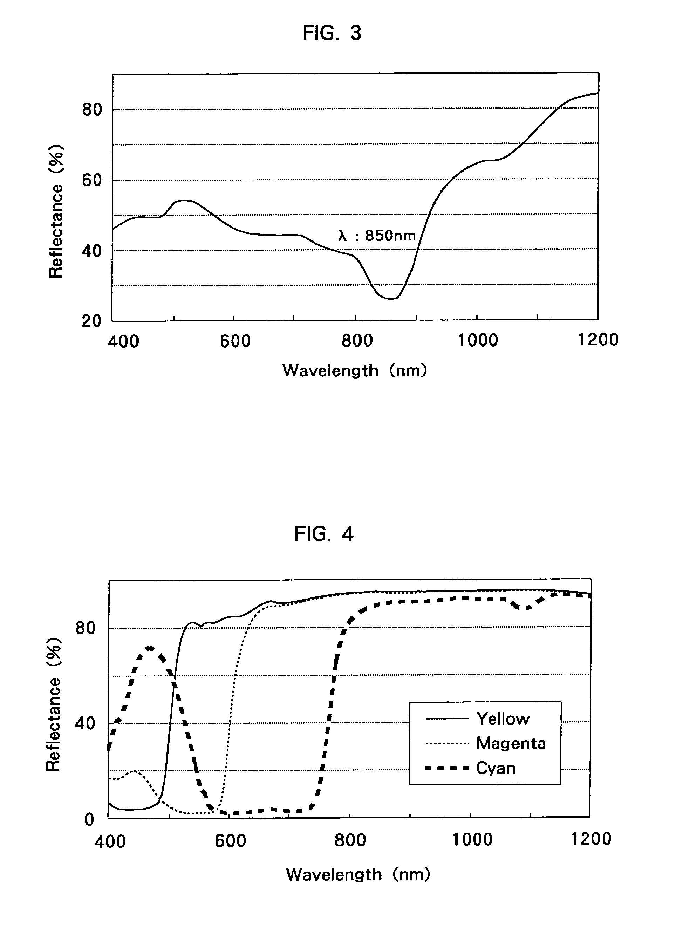

To print merchandise information codes, a near-infrared-absorbing colorant-1 (cyanine colorant) was provided as a colorant slightly colored to the naked eye and having an absorption in the near infrared range, and an infrared-absorbing, offset ink b-2-2 with the above-described colorant contained at 10% was prepared as in Example 1. To observe optical properties of the near-infrared-absorbing colorant-1, printing paper was printed with the infrared-absorbing, offset ink-1, and a reflection spectrum was measured by a fluorospectrophotometer. A slightly broad absorption with a maximum absorption at a wavelength of 850 nm was observed in the near infrared range. The reflection spectrum is shown in FIG. 3. Similarly, printing was also performed with the offset printing inks of three colors obtained in Example 1(2), i.e., the cyan ink a-1, magenta ink a-1 and yellow ink a-1, and reflection spectra were measured by a fluorospectrophotometer. In the infrared range, each color showed a sufficient reflection. The reflection spectra are shown in FIG. 4.

### (2) Printing of a printed matter for IT-dependent printed-matter-linked shopping

A press plate was provided to perform the offset printing of an advertisement booklet for IT-dependent printed-matter-linked shopping. Concerning two-dimensional codes indicating merchandise information codes, a press plate for the merchandise information codes was made by setting each code image area at 20.5 mm per side and the cell size at 0.50 mm because the section of each merchandise was about 4 cm in width and about 10 cm in height. As press plates for photographic pictures of the merchandises, three press plates of cyan, magenta and yellow were also made at a screen ruling of 175 lines per inch. Those press plates were made such that, at printing areas which would overlap with absorbing parts in the cells of the QR codes, very small parts not to be printed were distributed to permit reproduction of the two-dimensional codes by image processing although the two-dimensional codes were not conspicuous to the naked eye. The above-described QR code press plate and yellow, magenta and cyan press plates were set on a four-color offset printing press. The QR codes were printed as merchandise information codes with the above-described infrared-absorbing offset ink b-2-2 on coated printing paper, and further, the advertisements of the merchandises were printed with the offset printing inks of three colors obtained in Example 1(2), i . e. , the yellow ink a-1, magenta ink a-1 and cyan ink a-1 to obtain an advertisement booklet for IT-dependent, printed-matter-linked shopping.

### (3) Ordering for, receipt of and payment for a merchandise based on the printed matter for IT-dependent, printed-matter-linked shopping

A person who wanted to make a purchase provided a shielded, stationary, photographing stand, which was internally equipped with a near infrared radiation lamp having a visible-light-shielding black filter and permitted the mounting of a cellular phone equipped with an information code compatible camera to perform shooting. The photographing stand, which was equipped with the infrared lamp, was placed over the advertisement of a desired merchandise in the advertisement booklet for IT-dependent, printed-matter-linked shopping obtained above. The infrared lamp was turned on, and the camera was set. After confirming that a black image of the merchandise information was clearly and accurately displayed on a liquid crystal display of the cellular phone, transmission was performed to make an order. The merchandise was delivered from the retailer to the ordering person, and further, an accounting of a merchandise bill was performed.
It is to be noted that a transmittance curve of the visible-light-shielding black filter in the visible light and near infrared ranges is shown in FIG. 5.

### Example 6

### (1) Preparation of a near-infrared-absorbing inkjet printing ink, and printing

Prepared was a near-infrared-absorbing inkjet ink b-3-1, which contained the near-infrared-absorbing colorant-1 (6 parts) used in Example 5(1) and as a binder, the acrylic resin (10 parts) used in Example 2 and employed as a solvent a 1:1 mixed solvent of MEK-PGMA.

### (2) Printing of a printed matter of IT-dependent, printed-matter-linked shopping

Using the merchandise picture printing inks (a-1) of Example 1(2), 4-color offset printing was performed as in Example 5(2).
Adopted as a printing system for merchandise information codes was a system that divided the section of each merchandise picture into microareas and the microareas were converted into "0"/"1" digital signals while taking each cell as a single unit. Using a piezoelectric inkjet printer, merchandise information codes B-3-1 were printed with the near-infrared-absorbing inkjet ink b-3-1, which had been prepared above in (1), to obtain an advertisement booklet for IT-dependent, printed-matter-linked shopping.

### (3) Ordering for, receipt of and payment for a merchandise based on the printed matter for IT-dependent, printed-matter-linked shopping

Using the cellular phone equipped with the digital signal system compatible camera as described above in (2), a person who wished to make a purchase was able to order for, receive and pay for a desired merchandise by shooting the desired merchandise in the above-described advertisement booklet for IT-dependent printed-matter-linked shopping in a similar manner as in Example 5(3).

### Example 7

### (1) Preparation of chromatic, merchandise information printing inks

Printing inks (b) of high light fastness were prepared for printing merchandise information pictures(B) in colors. Using PY13 (insoluble azo yellow pigment, light fastness: Class 6), PR146 (insoluble azo red pigment, light fastness: Class 5), PR122 (red quinacridone pigment, light fastness: Class 8), PB15:3 (copper phthalocyanine blue pigment, color fastness: Class 8) and PBK7 (carbon-black black pigment, color fastness: Class 8) as colorants of excellent light fastness, offset printing inks were prepared in accordance with the below-described formulations in a similar manner as in Example 1.

**Table 4**

| Used material | Yellow ink b-1 | Magenta ink b-1 | Cyan ink b-1 | Black ink b-1 |
|---|---|---|---|---|
| PY13 | 10 | | | |
| PR146 | | 19 | | |
| PR122 | | 9 | | |
| PB15:3 | | | 15 | |
| PBK7 | | | | 18 |
| Oil varnish | 82 | 65 | 78 | 75 |
| Wax | 5 | 5 | 5 | 5 |
| Solvent | 3 | 2 | 2 | 2 |
| Total | 100 | 100 | 100 | 100 |

The oil varnish was the same as the oil varnish for offset inks, which was used in Example 1(1).

### (2) Printing of a printed matter of IT-dependent, printed-matter-linked shopping

Using the cyan ink b-1, magenta ink b-1, yellow ink b-1 and black ink b-1 obtained above in (1), an advertisement booklet for IT-dependent, printed-matter-linked shopping was prepared by 4-color offset printing. Two to four merchandises were inserted on each pate of the advertisement booklet. Photographs of the merchandises on each pate were printed in four colors as described above, and as their information codes, QR codes were printed at a cell number of 33 in single colors of cyan, magenta and black by overprinting. The printed matter for IT-dependent, printed-matter-linked shopping was obtained by printing the chromatic codes, which used the cyan color and magenta color, at a size of 13.5 mm and a cell size of 0.33 mm and the dark chromatic or black codes, which were based on the black color, at a size of 13.5 mm and a cell size of 0.25 mm.

### (3) Ordering for, receipt of and payment for a merchandise based on a printed matter for IT-dependent, printed-matter-linked shopping

A person who wanted to make a purchase directed a camera of a cellular phone equipped with QR compatible function toward the QR code in the section of a desired merchandise in the advertisement booklet. After confirming that an image of the merchandise information of the desired merchandise was clearly and accurately displayed on a liquid crystal display of the cellular phone, shooting was performed. The image of the merchandise was converted into electrical signals by the cellular phone to make an order. The merchandise was delivered from the retailer to the ordering person, and further, an accounting of a merchandise bill was performed.

### Example 8

### (1) Preparation of a yellow inkjet printing ink, and printing

Prepared was a yellow inkjet inkb-3-2, which contained PY83 (insoluble azo yellow pigment, light fastness: Class 7) (6 parts) and as a binder, the acrylic resin (10 parts) used in Example 2 and employed as a solvent a 1:1 mixed solvent of MEK-PGMA.

### (2) Printing of a printed matter of IT-dependent, printed-matter-linked shopping

Using the cyan ink b-1, magenta ink b-1, yellow ink b-1 and black ink b-1 obtained in Example 7(2), an advertisement booklet for IT-dependent, printed-matter-linked shopping was prepared by 4-color offset printing.
Adopted as a printing system for merchandise information codes was a system that divided the section of each merchandise picture into microareas, and the microareas of the merchandise picture were converted by subdividing each microarea while taking two cells as a single unit, and arranging groups of "1" signals linearly in groups of "0" signals to impart regularity to the distribution of "0"/"1" digital signals. Using a piezoelectric inkjet printer, merchandise information codes B-3-2 were printed with the yellow inkjet ink b-3-2, which had been prepared above in (1), to obtain the advertisement booklet for IT-dependent, printed-matter-linked shopping.

### (3) Ordering for, receipt of and payment for a merchandise based on the printed matter for IT-dependent, printed-matter-linked shopping

Using the cellular phone equipped with the digital signal system compatible camera as described above in (2), a person who wished to make a purchase made an order for a desired merchandise by shooting the desired merchandise in the above-described advertisement booklet for IT-dependent printed-matter-linked shopping in a similar manner as in Example 5(3). The merchandise was delivered from the retailer to the ordering person, and further, an accounting of a merchandise bill was performed.

### Industrial Applicability

The printing ink system according to the present invention is a printing ink system, which makes the combined use of a merchandise picture printing ink for printing a photographic picture of each merchandise in a printed matter for IT-dependent, printed-matter-linked shopping and a merchandise information code printing ink for printing the corresponding merchandise information code. The printed matter for IT-dependent, printed-matter-linked shopping has many characteristic features at the printed area of each merchandise information code. For example, each chromatic information code, owing to the use of a colorant excellent in fastness, does not undergo such color fading as causing a false recognition in the reading of its information even when displayed outdoor. In the case of chromatic information codes or codes which are practically invisible or unrecognizable, they do not give such an impression as impairing the beauty as opposed to conventional advertisement newspapers carrying only black information codes printed thereon. Such invisible or unrecognizable codes have a further merit in that the merchandizes and the merchandise information codes can be printed by fully using the space on paper.
When a consumer, for example, even a consumer of advanced age who is not comfortable in reading small characters or a consumer who is not versed in the operation of a computer wishes to purchase a merchandise, the consumer can order the desired merchandise only by an operation of simply shooting and transmitting the picture section of the merchandise in the printed matter for IT-dependent, printed-matter-linked shopping by information terminal equipment having shooting function such as a cellular phone equipped with an information code compatible camera, because the information image of the merchandise is automatically transmitted into electrical signals and transmitted. Further, the merchandise is delivered to the ordering person, and an accounting of a merchandise bill is performed. The present invention, therefore, provides consumers with significant convenience.

### Brief Description of the Drawings

[FIG. 1] A diagram showing an excitation spectrum when fluorescence emission from the red-fluorescence-emitting colorant-1 was set at 612 nm. A broad spectrum with a maximum excitation wavelength of 370 nm was observed.
[FIG. 2] A diagram showing a fluorescence emission spectrum when the excitation wavelength for the red-fluorescence-emitting colorant-1 was set at 365 nm. A relatively sharp emission with a maximum emission wavelength of 612 nm was observed.
[FIG. 3] A diagram showing a reflection spectrum of a printed matter, which had been obtained by printing coated paper with an offset ink of the red-fluorescence-emitting colorant-1, in a visible range and infrared range. A slightly broad absorption with a maximum absorption at a wavelength of 830 nm in a near infrared range was observed.
[FIG. 4] A diagram showing reflection spectra of a printed matter, which had been obtained by printing coated paper with offset inks (a) of cyan, magenta and yellow, in a visible range and infrared range. The spectra each showed a very high reflection in the near infrared range.
[FIG. 5] A diagram showing a transmittance curve of a black filter, which was included in an infrared lamp and served to shield visible light, in the visible range and infrared range. In the visible light range, the transmittance was low to indicate the shielding of light. In the near infrared range, a high transmittance was indicated.

## Claims

1. A printing ink system for printing a printed matter for IT-dependent, printed-matter-linked shopping, said printed matter being useful in a sales method of a merchandise that:
(1) a purchaser chooses said merchandise as a desired merchandise from merchandise information shown in said printed matter for IT-dependent, printed-matter-linked shopping, and shoots a corresponding section by information terminal equipment provided with a shooting function and transmitting function (step 1),
(2) a merchandise information image of the thus-shot section is converted into electrical signals, and said electrical signals are transmitted to a retailer via a predetermined communication network to order the thus-shot merchandise (step 2),
(3) electrical signals of image information, which have been transmitted corresponding to said order for said merchandise in a predetermined format via said communication network, are received, and are then processed such that a reply corresponding to said image information is sent to confirm said order for said merchandise and to accept said order (step 3),
(4) said merchandise is delivered from said retailer to said ordering person (step 4), and then
(5) an accounting of a merchandise bill is performed (step 5), wherein said printing ink system comprises a combination of:
(I) a printing ink (a) for printing a visible picture (A) of said merchandise in said printed matter for IT-dependent, printed-matter-linked shopping (which may hereinafter be called "said merchandise picture printing ink"); and
(II) a printing ink (b) for printing a merchandise information code (B) which can be converted into electronic information via said image shot by said image shooting information equipment and can be recognized (which may hereinafter be called "said merchandise information code printing ink").

2. A printing ink system according to claim 1, wherein said merchandise information code (B) contains information on at least one of a uniform resource locator of said retailer, a title and date of an advertisement, and details and a code number of said merchandise.

3. A printing method of a printed matter for IT-dependent, printed-matter-linked shopping as described in claim 1, wherein said merchandise information code is a barcode, two-dimensional code or digital watermark.

4. A printing ink system according to claim 1, wherein:
said merchandise picture printing ink (a) is a printing ink selected from printing inks comprising 1 to 8 colored inks and special color inks useful in general printing; and
said merchandise information code printing ink (b) is a printing ink selected from:
(1) a printing ink (b-1) for printing a visible information code consisting of "0"/"1" digital signals and visible to the naked eye,
(2) a printing ink (b-2) for printing an invisible information code consisting of "0"/"1" digital signals and invisible to the naked eye, or
(3) a printing ink (b-3) for printing an information code obtained by dividing said picture of said merchandise into microareas and converting said microareas into "0"/"1" digital signals, said information code being invisible to the naked eye or unrecognizable by the naked eye.

5. A printing ink system according to claim 4, wherein said printing ink (b-1) for printing said information code visible to the naked eye is a printing ink (b-1) of a single color, 2-8 colors or a special color selected from the group consisting of cyan, magenta, yellow, black, orange, green, purple and brown.

6. A printing ink system according to claim 4, wherein said printing ink (b-1) for printing said information code visible to the naked eye comprises a colorant having light fastness of at least class 5.

7. A printing ink system according to claim 4, wherein said printing ink (b-2) for printing said information code invisible to the naked eye is:
(1) a printing ink (b-2-1) comprising a fluorescent colorant capable of providing a print, which is practically non-chromatic or light chromatic under visible light and is excited by ultraviolet rays to emit a fluorescent color in a visible light range, or
(2) a printing ink (b-2-2) comprising a near infrared absorbing colorant capable of providing a print, which is non-chromatic, light chromatic or chromatic under visible light and has an absorption in a near infrared range.

8. A printing ink system according to claim 4, wherein said printing ink (b-3) for printing said information code, which has been obtained by dividing said picture of said merchandise and is invisible to the naked eye or unrecognizable by the naked eye, is:
(1) a printing ink (b-3-1) for imprinting in said merchandise picture a cryptographic system, which divides said merchandise picture into microareas and converts each of said microareas into "0"/"1" digital signals while taking each cell as a single unit, or
(2) a printing ink (b-3-2) for imprinting in said merchandise picture a cryptographic system, which converts said merchandise picture into digital signals by dividing said merchandise picture into microareas, dividing each of said microareas into two or more cells as a single unit, and arranging a group of "1" signal cells linearly in a group of "0" signal cells to impart regularity to a distribution of "0"/"1" digital signals.

9. A printing method of a printed matter for IT-dependent, printed-matter-linked shopping in an IT-dependent, printed-matter-linked shopping system comprising a sales method of a merchandise that:
(1) a purchaser shoots by an image shooting information equipment an image section shown in said printed matter for IT-dependent, printed-matter-linked shopping, which has been distributed to said purchaser, and containing a picture (A) of said merchandise as a desired merchandise and a relevant merchandise information code (B) (step 1),
(2) a merchandise information code image in the thus-shot section is converted into electrical signals, and said electrical signals are transmitted to a retailer via a predetermined communication network to order the thus-shot merchandise (step 2),
(3) electrical signals of image information, which have been transmitted corresponding to said order for said merchandise in a predetermined format via said communication network, are received, and are then processed such that a reply corresponding to said image information is sent to confirm said order for said merchandise and to accept said order (step 3),
(4) said merchandise is delivered from said retailer to said purchaser (step 4), and then
(5) an accounting of a merchandise bill is performed (step 5), wherein:
said printing method comprises printing both of said merchandise picture (A) and said merchandise information code (B) with said merchandise image printing ink (a) and said merchandise information code printing ink (b), respectively, in the same merchandise section on a sheet of paper.

10. A printing method according to claim 9, wherein as said merchandise information code, a barcode is printed with bar width dimensions of at least 0.20 mm, or a two-dimensional code is printed with cell sizes of at least 0.25 mm.

11. A printed matter for IT-dependent, printed-matter-linked shopping in an IT-dependent, printed-matter-linked shopping system comprising a sales method of a merchandise that:
(1) a purchaser shoots by an image shooting information equipment an image section shown in said printed matter for IT-dependent, printed-matter-linked shopping, which has been distributed to said purchaser, and containing a picture (A) of said merchandise as a desired merchandise and a relevant merchandise information code (B) (step 1),
(2) a merchandise information code image in the thus-shot section is converted into electrical signals, and said electrical signals are transmitted to a retailer via a predetermined communication network to order the thus-shot merchandise (step 2),
(3) electrical signals of image information, which have been transmitted corresponding to said order for said merchandise in a predetermined format via said communication network, are received, and are then processed such that a reply corresponding to said image information is sent to confirm said order for said merchandise and to accept said order (step 3),
(4) said merchandise is delivered from said retailer to said purchaser (step 4), and then
(5) an accounting of a merchandise bill is performed (step 5), wherein:
said printed matter for IT-dependent, printed-matter-linked shopping is a printed matter with both of said merchandise picture (A) and said merchandise information code (B) printed with said merchandise image printing ink (a) and said merchandise information code printing ink (b), respectively, in the same merchandise section on a sheet of paper.

12. A printed matter according to claim 11, wherein said printed matter for IT-dependent, printed-matter-linked shopping is an advertisement printed matter for the sales of merchandises selected from the group consisting of foldouts, merchandise advertisement booklets, merchandise catalogs, merchandise advertisement magazines, and inserted advertisement pages in newspapers or magazines.

13. A printed matter according to claim 11, wherein merchandises to be advertised are tangible or intangible, valuable properties for sale, rent or lease, which are selected from the group consisting of everyday life items, office items, information-related items, specialty items, performance/transport-related merchandises, eating/travel/sightseeing-related merchandises, and real estate properties.
